(19) Europäisches Patentamt
European Patent Office
Office européen des brevets

(11) **EP 1 648 074 B1**

(12) **EUROPÄISCHE PATENTSCHRIFT**

(45) Veröffentlichungstag und Bekanntmachung des Hinweises auf die Patenterteilung:
**10.03.2010 Patentblatt 2010/10**

(51) Int Cl.:
***H02K 3/52*** *(2006.01)*

(21) Anmeldenummer: 05019798.7

(22) Anmeldetag: **12.09.2005**

(54) **Elektrische Maschine, insbesondere Gleichstrommotor**

Electrical machine, in particular a DC motor

Machine électrique, en particulier moteur à courant continu

(84) Benannte Vertragsstaaten:
**CH DE FR IT LI**

(30) Priorität: **15.10.2004 DE 102004050374**

(43) Veröffentlichungstag der Anmeldung:
**19.04.2006 Patentblatt 2006/16**

(73) Patentinhaber: **MINEBEA Co., Ltd.**
**Kitasaku-gun, Nagano-ken 3849-2100 (JP)**

(72) Erfinder: **Schill, Jürgen**
**78073 Bad Dürrheim (DE)**

(74) Vertreter: **Liesegang, Eva**
**Forrester & Boehmert**
**Pettenkoferstrasse 20-22**
**80336 München (DE)**

(56) Entgegenhaltungen:
EP-A- 0 863 601      WO-A-03/021745
WO-A-2004/010562    DE-A1- 10 128 769
DE-A1- 10 301 441   FR-A- 2 837 993
US-A- 5 828 147

• PATENT ABSTRACTS OF JAPAN Bd. 2000, Nr. 11, 3. Januar 2001 (2001-01-03) -& JP 2000 224801 A (SAAMOSETTA:KK), 11. August 2000 (2000-08-11)

**Beschreibung**

Die Erfindung betrifft eine elektrische Maschine und insbesondere einen Gleichstrommotor, mit einem Stator, der Wicklungen trägt, welche zur Ansteuerung der Maschine miteinander elektrisch verschaltet sind, gemäß dem Oberbegriff von Patentanspruch 1. Eine solche Maschine ist beispielsweise in der JP-A-2002 224801 beschrieben. Ein ähnlicher Stand der Technik findet sich auch in der WO 2004/010562 A1..
Ein bevorzugtes Anwendungsgebiet der Erfindung sind bürstenlose Gleichstrommotoren und andere Permanentmagnetmotoren, die als Innenläufermotor oder Außenläufermotor konfiguriert sein können. Gleichstrommotoren mit einer Innenläuferkonfiguration weisen einen Rotorrückschluß auf, der auf eine Welle aufgebracht ist und einen oder mehrere Permanentmagnete trägt. Die Permanentmagnete sind auf den Rotorrückschluß aufgebracht oder in diesen eingebettet. Der Rotor wird von einem Stator umschlossen, der in der Regel einen Statorkörper aus mehreren paketierten Metallblechen umfaßt, der einen ringförmigen Statorrückschluß bildet, von dem sich Statorzähne radial nach innen erstrecken. Die Statorzähne bilden Pole, zwischen welchen Statornuten zur Aufnahme von Statorwicklungen gebildet sind. Für jede Phase des Motors ist wenigstens eine Wicklung vorgesehen, wobei die um die Statorzähne gelegten Wicklungen jeweils einer Phase parallel oder in Reihe geschaltet werden können. Bei einem Innenläufermotor ist die Rotoranordnung koaxial in die Statoranordnung eingefügt; bei einem Außenläufermotor umschließt, umgekehrt, die Rotoranordnung den Stator koaxial.

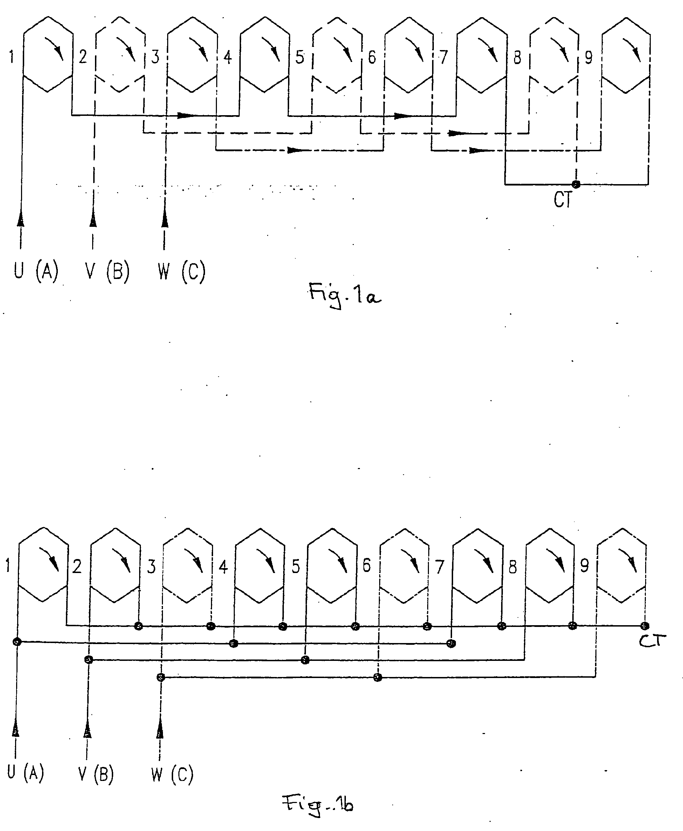

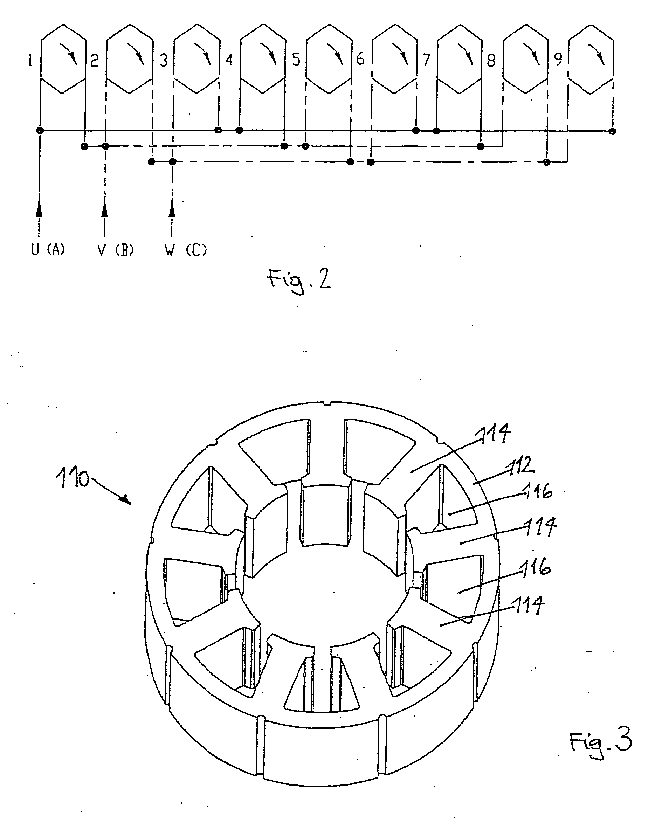

Bei einem Gleichstrommotor, auf den die Erfindung anwendbar ist, besteht der Stator üblicherweise aus einem genuteten Blechpaket, wobei die Wicklungen, beispielsweise wie in den Fig. 1a, 1b und 2 gezeigt, um die Statorzähne gewickelt und verschaltet werden können.

Fig. 1a zeigt ein Wickelschema für einen neunnutigen Stator, wobei die zu einer Phase gehörenden Wicklungen in Reihe geschaltet und die Wicklungen in einer Sternschaltung verbunden sind. Fig. 1b zeigt ein Wickelschema für einen neun-nutigen Motor, wobei die einzelnen, zu einer Phase gehörenden Wicklungen parallel geschaltet und die Wicklungen in einer Sternschaltung verbunden sind. Fig. 2 zeigt ein Wickelschema für einen neun-nutigen Elektromotor, wobei die einzelnen, zu einer Phase gehörenden Wicklungen parallel geschaltet und die Wicklungen in einer Dreieckschaltung verbunden sind.

In den Fig. 1a, b und 2 sind die drei Phasen des Motors mit U (A); V (B); und W (C) bezeichnet. Die zwischen den Statorzähnen gebildeten Nuten sind von 1 bis 9 durchnumeriert. Der Stempunkt der Sternschaltung ist in den Fig. 1a und 1b mit CT bezeichnet.
Aus den Fig. 1a, b und 2 wird deutlich, daß abhängig von der Verschaltung der Statorwicklungen unterschiedliche Anschlußanordnungen für die Wicklungen vorgesehen werden müssen, selbst wenn sich die Anzahl der Phasen und der Statornuten des Motors nicht ändert.

Aus der DE 36 07 289 ist ein bürstenloser Gleichstrommotor bekannt, dessen Wicklungen über einen Flanschring im Bereich einer Stirnseite des Stators angeschlossen werden. In dem Flanschring werden in einer Ebene Leiterbahnen gehalten, und über Fensteröffnungen in dem Flanschring können die Anschlußenden der Wicklungen mit den Leiterbahnen verbunden werden. Die Leiterbahnen bestehen aus gestanzten Metallstreifen und umfassen von dem Flanschring radial weggeführte Anschlußzungen. Bei der beschriebenen Anschlußanordnung ist es notwendig, für jede Art der Verschaltung der Motorwicklungen einen eigens angepaßten Flanschring mit entsprechend konfigurierten Leiterbahnen vorzusehen.

Es ist die Aufgabe der Erfindung, eine elektrische Maschine anzugeben, die einfach aufgebaut ist und für verschiedene Wickelschemata der Phasenwicklungen keine unterschiedlichen Anschlußanordnungen benötigt. Diese Aufgabe wird durch eine elektrische Maschine mit den Merkmalen von Anspruch 1 gelöst.

Die Erfindung sieht eine elektrische Maschine und insbesondere einen Gleichstrommotor mit einem Stator vor, der Wicklungen trägt, welche zur Ansteuerung der Maschine miteinander verschaltet sind. Jede Phase der Maschine umfaßt wenigstens eine Wicklung. Erfindungsgemäß ist eine Anschlußvorrichtung zum Verschalten der Wicklungen vorgesehen, die mehrere Anschlußringe aufweist, welche an einem Stirnende des Stators koaxial zu diesem angeordnet sind. Die Anschlußringe werden mit axialem Abstand zueinander angeordnet oder auf andere Weise gegeneinander isoliert. Die Anzahl der Anschlußringe ist wenigstens so groß wie die Anzahl der Phasen, so daß jede Wicklung einer Phase mit einem zugeordneten Anschlußring verbunden werden kann. Die erfindungsgemäße Anschlußvorrichtung für die Wicklungen der elektrischen Maschine kann aus mehreren vorzugsweise gleichförmigen Anschlußringen aufgebaut werden, die beispielsweise aus einem Blech ausgestanzt werden. Die Anschlußringe sind so gestaltet, daß sie am Stirnende des Stators koaxial zu diesem und jeweils um einen bestimmten Winkel gegeneinander verdreht angeordnet werden.

Die erfindungsgemäße Anschlußvorrichtung wird wie folgt hergestellt. Ein Anschlußring wird an dem Stirnende des Stators angeordnet, und die Wicklung einer Phase wird abhängig von dem Wickelschema daran angelötet; anschließend wird ein im wesentlichen identischer Anschlußring mit Abstand und koaxial zu dem ersten Anschlußring, jedoch um einen gewissen Winkel verdreht, an der Stirnseite des Stators angeordnet, und in die Wicklung der nächsten Phase der Maschine wird an diesen zweiten Anschlußring angelötet; usw. Die Erfindung hat den Vorteil, daß für das Anschließen und Verschalten der Motorwicklungen lediglich mehrere gleich geformte Anschlußringe benötigt werden, die eine einfache Struktur haben und aufgrund der Vielzahl gleicher Bauteile kostengünstig hergestellt werden können.

Wenn die Wicklungen der elektrischen Maschine in einer Sternschaltung miteinander verbunden werden, ist die Anzahl der Anschlußringe vorzugsweise gleich der Anzahl der Phasen der Maschine plus Eins (1). In dieser Konfiguration ist ein Anschlußring zur Verbindung mit dem Sternpunkt der Sternschaltung vorgesehen; so daß der Sternpunkt nach außen geführt werden kann. In einer alternativen Konfiguration können die Wicklungen in ihrem Sternpunkt direkt im Motorraum miteinander verbunden werden, so daß der Sternpunkt nicht über einen Anschlußring nach außen geführt wird. In dieser Konfiguration beträgt die Anzahl der Anschlußringe gleich der Anzahl der Phasen, d.h. drei (3). Wenn die Wicklungen in einer Dreieckschaltung verschaltet werden, ist die Anzahl der Anschlußringe vorzugsweise gleich der Anzahl der Phasen, d.h. drei (3).

Erfindungsgemäß werden die Anschlußringe vorzugsweise als Stanzblechteile hergestellt. Dies hat den Vorteil, daß zum Herstellen der Anschlußvorrichtung aus den mehreren Ringen nur ein einziges, sehr einfaches Stanzwerkzeug benötigt wird. Das Blech sollte aus einem elektrisch gut leitenden, gut schweißbaren Metall, beispielsweise einer Cu-Legierung, bestehen, um geringe Leitungsverluste zu erzeugen und die Wicklungsenden einfach an die Anschlußringe anlöten zu können.

Erfindungsgemäß weisen die Anschlußringe an ihrer Außenseite Vorsprünge zum Positionieren der Anschlußringe auf, welche sich in radialer Richtung erstrecken. Diese Vorsprünge wirken mit entsprechenden Ausnehmungen an einer Gehäuseinnenwand zusammen, um die Anschlußringe relativ zu dem Gehäuse zu positionieren und in ihrer Position zu halten. Um eine mechanisch stabile Lagerung der Anschlußringe in den Ausnehmungen zu erzielen, werden vorzugsweise drei solche Vorsprünge an der Außenseite der Anschlußringe vorgesehen. Es ist zweckmäßig, daß die Anzahl der Ausnehmungen in der Gehäuseinnenwand zum Aufnehmen dieser Vorsprünge der Anzahl der Statornuten entspricht. Die Anzahl und Anordnung der Vorsprünge und der korrespondierenden Ausnehmung zum Positionieren der Anschlußringe sollte geeignet so gewählt werden, daß jede gewünschte Drehposition der Anschlußringe eingestellt werden kann.

In einer weiteren bevorzugten Ausführung der Erfindung weisen die Anschlußringe an ihrer Außenseite jeweils eine Anschlußfahne zum Anschließen einer Stromversorgung für die Maschine auf. Diese Anschlußfahne erstreckt sich in axialer Richtung der Maschine, senkrecht zur Ebene des Anschlußrings und kann so ausgebildet sein, daß sie direkt in Form eines Steckkontaktes aus der Maschine herausgeführt wird.

Die Anschlußringe können ferner an ihrer Innenseite Vorsprünge zum Anbringen von Wicklungsenden aufweisen, welche sich in radialer Richtung erstrecken. Dadurch wird die Verbindung zwischen den Wicklungsenden und den Anschlußringen vereinfacht. Die Anzahl dieser Vorsprünge ist vorzugsweise gleich der Anzahl der Statornuten.

Die Erfindung ist im folgenden anhand bevorzugter Ausführungsformen mit Bezug auf die Zeichnungen näher erläutert. In den Figuren zeigen:

Fig. 1a ein Wickelschema eines neun-nutigen Gleichstrommotors, dessen Phasen in einer Sternschaltung verbunden sind, wobei jeweils die Wicklungen einer Phase in Reihe geschaltet sind;

Fig. 1b ein Wickelschema eines neun-nutigen Gleichstrommotors, dessen Phasen in einer Sternschaltung verbunden sind, wobei jeweils die Wicklungen einer Phase parallel geschaltet sind;

Fig. 2 ein Wickelschema eines neun-nutigen Gleichstrommotors, dessen Phasen in einer Dreieckschaltung verbunden sind, wobei jeweils die Wicklungen einer Phase parallel geschaltet sind;

Fig. 3 eine schematische perspektivische Darstellung eines Statorkörpers gemäß dem Stand der Technik;

Fig. 4a eine Draufsicht auf einen Anschlußring gemäß der Erfindung;

Fig. 4b eine Seitenansicht des Anschlußringes der Fig. 4a;

Fig. 5 eine Schnittdarstellung durch eine elektrische Maschine gemäß der Erfindung, wobei lediglich der Stator, ein Gehäuse sowie die Anschlußvorrichtung gezeigt ist;

Fig. 6 eine auseinandergezogene perspektivische Darstellung der elektrischen Maschine gemäß Fig. 5;

Fig. 7 eine perspektivische Darstellung der elektrischen Maschine der Fig. 5 in zusammengefügtem Zustand; und

Fig. 8 eine perspektivische Explosionsdarstellung eines vollständigen Gleichstrommotors gemäß der Erfindung.

Die Erfindung ist im folgenden anhand des Beispiels eines neun-nutigen Gleichstrommotors beschrieben, wobei ein Fachmann verstehen wird, daß die Erfindung nicht auf die beschriebenen Einzelheiten beschränkt ist.

Fig. 3 zeigt eine perspektivische Darstellung eines Statorkörpers gemäß dem Stand der Technik, wie er auch in der erfindungsgemäßen Maschine verwendet werden kann. Der Statorkörper 110 umfaßt einen Rückschlußring 112 und von dem Rückschlußring 112 nach innen radial abstehende Statorzähne 114. Zwischen den Statorzähnen 114 sind Statornuten 116 gebildet, welche Statorwicklungen (in der Figur nicht gezeigt) aufnehmen, die um die Statorzähne 114 gewickelt werden.

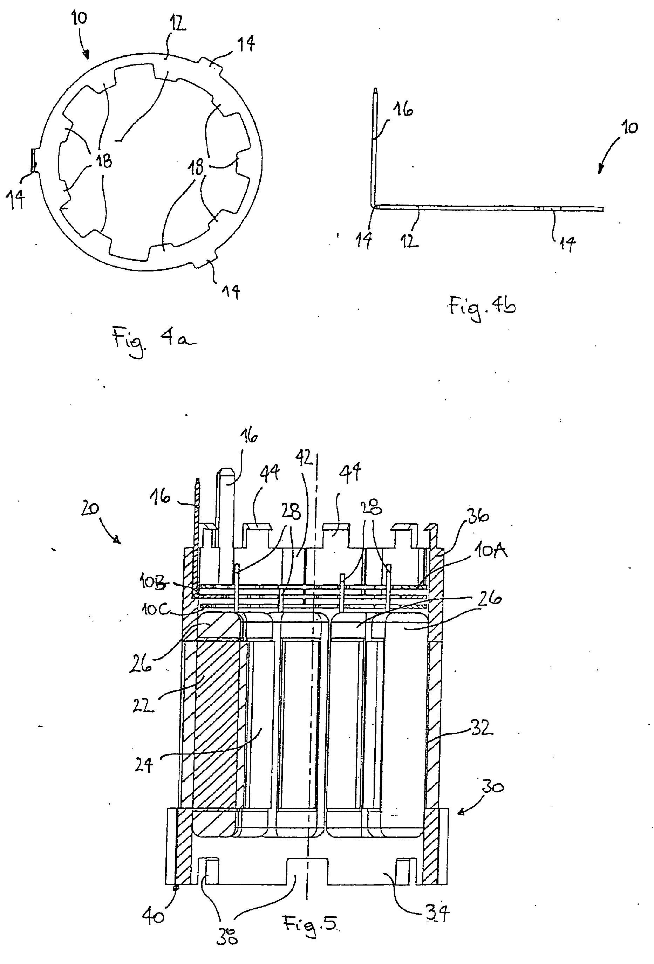

Wie sich aus einem Vergleich der Fig. 3 und 4a ergibt, entspricht die Anzahl der Vorsprünge 18 an der Innenseite des Anschlußrings 10 der Anzahl der Nuten 116 des Stators 110, die in diesem Beispiel für einen neun-nutigen Gleichstrommotor bestimmt sind. Erfindungsgemäß werden mehrere Anschlußringe 10 an einem Stirnende des Stators, koaxial mit Abstand zueinander angeordnet, um die Wicklungen der einzelnen Motorphasen zu verschalten. Dabei können verschiedene Schaltungsanordnungen, insbesondere Dreieck- und Sternschaltung, sowie Reihen und Parallelschaltung der einzelnen Wicklungsabschnitte einer Phase, mit Hilfe gleicher Anschlußringe 10 realisiert werden.

Die Fig. 4a und 4b zeigen eine Draufsicht und eine Seitenansicht eines Anschlußringes 10, der Bestandteil einer Anschlußvorrichtung gemäß der Erfindung ist. Der Anschlußring 10 umfaßt einen Ringkörper 12, von dessen Außenseite drei Vorsprünge 14 in radialer Richtung abstehen, welche zum Positionieren des Anschlußrings 10 dienen, wie unten näher erläutert ist. Einer der Vorsprünge 14 geht in eine Anschlußfahne 16 über, die sich senkrecht zur Ebene des Körpers 12 des Anschlußrings erstreckt. Die Anschlußfahne 16 dient zum Anschließen einer Stromversorgung für die elektrische Maschine, wie unten noch näher erläutert ist. An der Innenseite des ringförmigen Körpers 12 sind Vorsprünge 18 ausgebildet, welche zum Anbringen von Wicklungsenden dienen. Die Anzahl der Vorsprünge 18 an der Innenseite des Anschlußrings 10 entspricht in einer bevorzugten Ausführung der Erfindung der Anzahl der Nuten des Elektromotors, wie unten noch genauer erläutert ist. In dem Beispiel der Fig. 4a und 4b ist ein Anschlußring 10 für einen neun-nutigen Elektromotor dargestellt. Ein zugehöriger (unbewickelter) Stator für einen solchen Motor ist in Fig. 3 dargestellt.

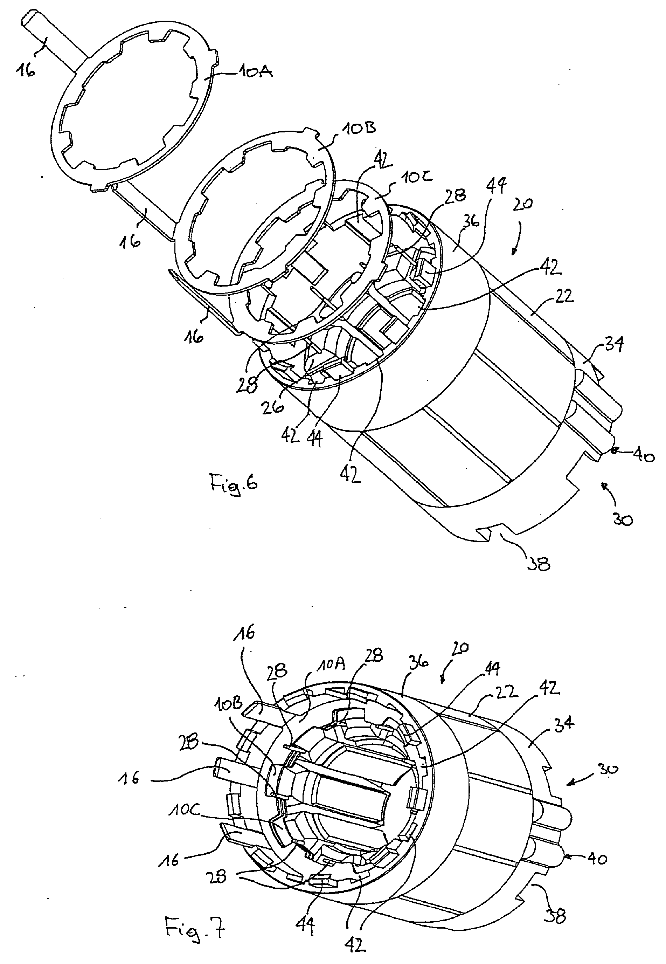

Fig. 5 zeigt eine Schnittdarstellung durch einen Gleichstrommotor gemäß der Erfindung, wobei der Klarheit halber der Rotor sowie die stirnseitigen Flansche des Motors weggelassen sind. Fig. 6 und 7 zeigen perspektivische Darstellungen des in Fig. 5 dargestellten Elektromotors, wobei in Fig. 6 die Anschlußringe in auseinandergezogener Darstellung und in Fig. 7 in montiertem Zustand gezeigt sind.

Der Gleichstrommotor 20 umfaßt einen Stator 22, der wie in Fig. 3 gezeigt ausgebildet sein kann. Der Stator 22 ist beispielsweise aus einem genuteten Blechpaket aufgebaut, wobei Statorzähne 24 die Statornuten eingrenzen. Um die Statorzähne 24 sind Wicklungen 26 auf den Stator 22 gewickelt, wobei das Wickelschema einem der in Fig. 1a, 1b und 2 gezeigten Wikkelschemata entsprechen kann, hierauf jedoch nicht beschränkt ist. Im folgenden sei angenommen, daß die Wicklungen 26 in diesem Beispiel in einer Dreieckschaltung miteinander verbunden sind, die beispielsweise in Fig. 2 gezeigt ist. An einem Stirnende des Stators 22 sind drei Anschlußringe 10A, 10B, 10C angeordnet, die den drei Phasen U (A), V (B) und W (C) des Gleichstrommotors zugeordnet werden. Die Anschlußringe 10A, 10B, 10C sind koaxial zu dem Stator 22 mit Abstand zueinander angeordnet. Die Anschlußringe 10A, 10B, 10C sind vorzugsweise wie der in den Fig. 4a und 4b dargestellte Anschlußring 10 ausgebildet und weisen innere Vorsprünge 18 zum Anschließen von Wicklungsenden sowie äußere Vorsprünge 14 zum Positionieren der Anschlußringe sowie Anschlußfahnen 16 auf.

Die Wicklungsenden 28 der Wicklungen 26 werden an den inneren Vorsprüngen 18 gemäß dem in Fig. 2 gezeigten Wickelschema angelötet. Jeder der Anschlußringe 10A, 10B, 10C stellt somit Kontaktpunkte für jeweils eine der Phasen U (A), V (B), W (C) des Gleichstrommotors bereit, wobei abhängig von dem Wickelschema die Wicklungsenden in unterschiedlicher Konfiguration mit den zugehörigen Anschlußringen verbunden werden. Sofern die Wicklungen des Gleichstrommotors in einer Sternschaltung miteinander verbunden sind, kann ein zusätzlicher Anschlußring zur Kontaktierung des Sternpunktes vorgesehen werden. Dieser zusätzliche Anschlußring kann wie der in den Fig. 4a und 4b gezeigte Anschlußring 10 ausgebildet sein, wobei jedoch das Vorsehen der Anschlußfahne 16 für diesen Anschlußring nicht notwendig ist.

Die Anschlußringe 10A, 10B, 10C werden so an dem Gleichstrommotor angeordnet, daß die Anschlußfahnen 16 als Steckkontakte dienen, welche aus einem Motorgehäuse herausgeführt werden, um den Motor von außen anzusteuern.

In der in den Fig. 5 bis 7 gezeigten Ausführung des erfindungsgemäßen Gleichstrommotors ist an den Stator 22 ein Gehäusekörper 30, vorzugsweise aus Kunststoff, angeformt, der eine Isolierschicht 32 in den Statornuten und stirnseitige Gehäuseabschnitte 34, 36 umfaßt.

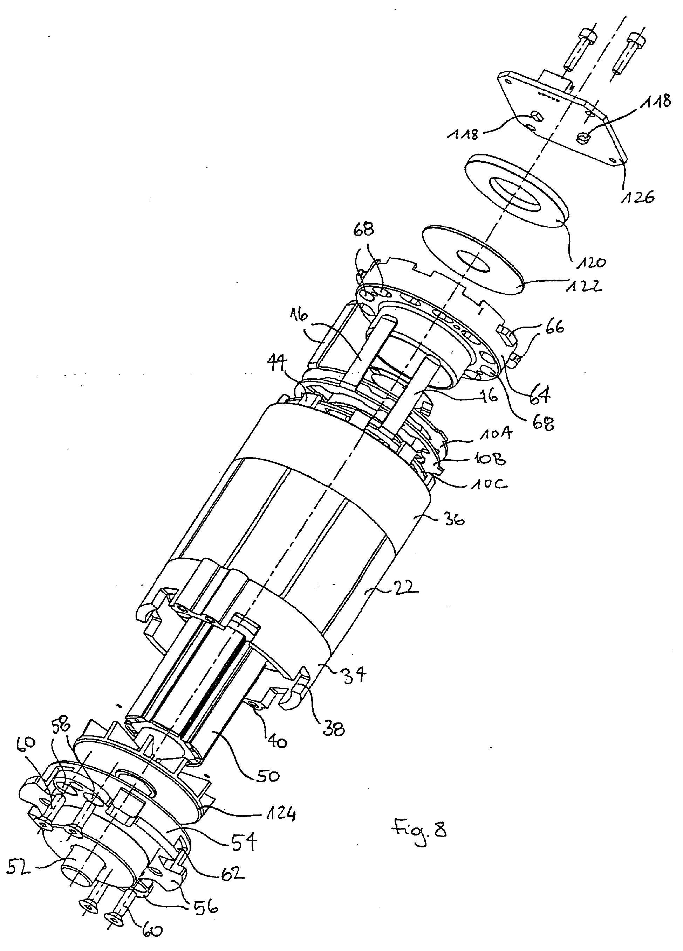

Der Gehäusekörper 30 ist so ausgebildet, daß die beiden stirnseitigen Gehäuseabschnitte 34, 36 mit der Außenfläche des Stators 22 weitgehend fluchten und sich unmittelbar an diesen anschließen. Dadurch bildet der Stator 22 zusammen mit dem Gehäusekörper 30 eine nach außen abgeschlossene Einheit; ein zusätzliches Gehäuse, welches den gesamten Motor umgibt, ist nicht notwendig. An dem Gehäuseabschnitt 34 sind Ausnehmungen 38 und Bohrungen 40 ausgebildet, welche dazu dienen, einen A-Flansch, der der Abtriebsseite zugeordnet ist, zu positionieren und zu befestigen, wie mit Bezug auf Fig. 8 näher erläutert ist.

An dem gegenüberliegenden Gehäuseabschnitt 36, bei dem die Ansteuerung des Gleichstrommotors angeordnet werden wird, sind ebenfalls Ausnehmungen 42 an der Innenwand des Gehäuseabschnitts 36 ausgebildet, die zum Positionieren der Anschlußringe 10A, 10B, 10C dienen. In einer bevorzugten Ausführung der Erfindung entspricht die Anzahl der Ausnehmungen 42 an der Innenwand des Gehäuseabschnittes 46 der Nutzahl des Gleichstrommotors - bei der dargestellten Ausführung neun -, so daß die Anschlußringe 10A, 10B, 10C um einen Winkel α gegeneinander verdreht werden können, der $\alpha = \dfrac{360°}{Nutzahl}$ oder einem ganzzahligen Vielfachen davon entspricht. Dadurch lassen sich die Anschlußringe 10A, 10B, 10C so positionieren, daß die jeweils zugehörigen Wicklungsenden 28 einfach an den inneren Vorsprüngen 18 angelötet werden können und daß die Anschlußfahnen 16, nach Bedarf nebeneinander oder gleichmäßig um den Umfang des Motors verteilt, angeordnet werden können.

Von den Ausnehmungen 42 ist jeweils ein Tripel zur Aufnahme eines Anschlußrings 10A, 10B oder 10C vorgesehen. Die drei Ausnehmungstripel sind in axialer Richtung an dem Gehäuseabschnitt 46 mit unterschiedlichen Tiefen ausgebildet, so daß die Anschlußringe 10A, 10B, 10C in unterschiedlichen Ebenen positioniert werden können. Damit ist es möglich, die Anschlußringe 10A, 10B, 10C mit axialem Abstand zueinander anzuordnen, ohne daß eine zusätzliche Isolation zwischen den Ringen vorgesehen werden muß. Jeweils ein Ausnehmungstripel, das einem Anschlußring 10A, 10B oder 10C zugeordnet ist, weist bei der gezeigten Ausführung drei um 120° versetzt angeordnete Ausnehmungen 42 derselben axialen Länge, gemessen vom Außenrand des Gehäuseabschnitts 46, auf, wobei diese axiale Länge jedoch anders ist als die der beiden anderen Ausnehmungstripel, in welche jeweils die beiden anderen Anschlußringe eingelegt werden.

Der Gehäuseabschnitt 36 weist ferner Rastnasen 44 auf, die mit einem B-Flansch auf dieser Stirnseite des Gleichstrommotors zusammenwirken, wie ebenfalls mit Bezug auf Fig. 8 deutlicher werden wird.

Fig. 8 zeigt eine perspektivische Explosionsdarstellung eines Gleichstrommotors gemäß der Erfindung. Korrespondierende Teile sind mit denselben Bezugszeichen wie in den Fig. 5 bis 7 gekennzeichnet.

In den Stator 22 ist ein Rotor 50 koaxial eingefügt, der auf eine Welle 52 aufgebracht ist. An dem Abtriebsende des Motors (in der Figur unten), das bei dem Gehäuseabschnitt 34 liegt, ist ein sogenannter A-Flansch 54 angeordnet, der in Flanschabschnitten 56 Bohrungen 58 aufweist, die mit den Bohrungen 40 des Gehäuseabschnitts 34 in Deckung gebracht werden. Der A-Flansch 54 kann mittels Schrauben 60, Nieten oder ähnlichen Verbindungselementen durch die Bohrungen 58, 40 mit dem Gehäuseabschnitt 34 verbunden werden. In der gezeigten Ausführung hat der A-Flansch 54 an seinem Umfang Ausnehmungen 62, welche mit den Ausnehmungen 38 an dem Gehäuseabschnitt 34 fluchten. Die Ausnehmungen 62, 38 dienen als Lüftungsschlitze zum Durchlaß von Luft, welche mittels eines Lüfterrades 124 bewegt wird, um den Gleichstrommotor zu belüften und zu kühlen.

Auf der von dem Abtriebsende abgewandten Stirnseite des Gleichstrommotors, bei dem Gehäuseabschnitt 36, sind die drei Anschlußringe 10A, 10B, 10C dargestellt, die zur Kontaktierung der Phasenwicklungen des Gleichstrommotors (in dieser Figur nicht gezeigt) dienen. Die Anschlußringe 10A, 10B, 10C weisen die Anschlußfahnen 16 auf, die nach der Montage des Gleichstrommotors aus dem Gehäuse herausgeführt sind und zum Anschließen einer Stromversorgung bzw. Ansteuerung für den Gleichstrommotor dienen. An dieser Stirnseite wird der Gleichstrommotor durch einen Deckel oder B-Flansch 64 abgeschlossen, wobei der B-Flansch 64 Vorsprünge 66 aufweist, die als Höhenanschlag für den Flansch 64 auf dem Gehäusekörper 30 dienen. Nachdem die Anschlußringe 10A, 10B, 10C und der B-Flansch 64 auf den Gehäuseabschnitt 36 aufgebracht sind, werden sie darin mittels der Rastnasen 44 gehalten. Der B-Flansch 64 weist Durchbrechungen 68 zum Ansaugen der zur Belüftung dienenden Luft auf.

Die Anschlußfahnen 16 werden an der Außenseite des B-Flansches 64 entlang nach außen geführt.

Auf der Seite der Stromversorgung wird der Gleichstrommotor durch eine Platine 126 abgeschlossen. Auf der Platine 126 sind Hallsensoren oder andere Magnetsensoren 118 zur Erfassung der Drehlage des Rotors 50 angeordnet. Die Magnetsensoren 118 wirken mit einem Steuermagneten 120 zusammen, der auf einen magnetischen Rückschlußring 122 montiert und mit der Motorwelle 52 drehfest verbunden ist, um die zur Steuerung des Elektromotors notwendigen Kommutierungssignale zu erzeugen. Der Steuermagnet 120 ist auf der den Magnetsensoren zugewandten Seite des ferromagnetischen Rückschlußrings 122 angeordnet, so daß Magnetsensoren und Steuermagnet einander zugewandt sind.

Durch die erfindungsgemäße Anschlußvorrichtung erhält man eine elektrische Maschine, in der verschiedene Wickelschemata unkompliziert in Dreieck- oder Sternschaltung, seriell oder parallel angeschlossen werden können, ohne daß dadurch die Anschlußvorrichtung verändert werden müßte. Die Verschaltung der Wicklungen wird realisiert, indem zunächst ein Anschlußring in das Gehäuse eingelegt wird, die Wicklungen einer Phase werden nach Bedarf an den Anschlußring angelötet, und anschließend wird ein identischer Anschlußring um einen bestimmten Winkel verdreht und mit axialem Abstand eingelegt, und die Wicklungen der nächsten Phase werden an diesen weiteren Anschlußring angelötet. Dies wird für den dritten Anschlußring wiederholt. Sofern die Phasen in einer Sternschaltung miteinander verbunden werden, kann für den Stempunkt ein zusätzlicher Anschlußring vorgesehen werden. Zum Herstellen der erfindungsgemäßen Anschlußvorrichtung wird nur ein einfaches Stanzwerkzeug benötigt, weil sämtliche Anschlußringe vorzugsweise gleich geformt sind. Das Einlegen und Fixieren der Anschlußringe ist durch die beschriebene Ausbildung des Gehäusekörpers besonders einfach. Aufgrund des axialen Abstandes der Anschlußringe werden keine weiteren Vorkehrungen zur Isolation der Anschlußringe benötigt.

Die in der vorstehenden Beschreibung, den Ansprüchen und den Zeichnungen offenbarten Merkmale können für die vorliegende Erfindung in verschiedenen Ausführungen sowohl einzeln als auch in beliebiger Kombination von Bedeutung sein.

Bezugszeichenliste

| 10 | Anschlußring |
|---|---|
| 10A, 10B, 10C | Anschlußring |
| 12 | ringförmiger Körper |
| 14 | Vorsprünge an der Außenseite |
| 16 | Anschlußfahne |
| 18 | Vorsprünge an der Innenseite |
| 20 | Elektromotor |
| 22 | Stator |
| 24 | Statorzähne |
| 26 | Wicklungen |
| 28 | Wicklungsenden |
| 30 | Gehäusekörper |
| 32 | Isolierschicht |
| 34, 36 | stirnseitige Gehäuseabschnitte |
| 38 | Ausnehmungen |
| 40 | Bohrungen |
| 42 | Ausnehmungen |
| 44 | Rastnasen |
| 50 | Rotor |
| 52 | Welle |
| 54 | A-Flansch |
| 56 | Flanschabschnitte |
| 58 | Bohrungen |
| 60 | Schrauben |
| 62 | Ausnehmungen |
| 64 | Deckel oder B-Flansch |
| 66 | Vorsprünge |
| 68 | Durchbrechungen |
| 110 | Stator |
| 112 | Rückschlußring |
| 114 | Statorzähne |
| 116 | Statornuten |
| 118 | Sensoren |
| 120 | Steuermagnet |
| 122 | Rückschluß |
| 124 | Lüfterrad |
| 126 | Platine |

**Patentansprüche**

1. Elektrische Maschine, insbesondere Gleichstrommotor, mit einem Stator (22), der Wicklungen (26) trägt, welche zur Ansteuerung der Maschine miteinander verschaltet sind, wobei jede Phase der Maschine wenigstens eine Wicklung (26) umfaßt, und mit einer Anschlußvorrichtung zur Verschaltung der Wicklungen (26), wobei die Anschlußvorrichtung mehrere Anschlußringe (10A, 10B, 10C) aufweist, die an einem Stirnende des Stators (22) koaxial zu diesem angeordnet sind, wobei die Anzahl der Anschlußringe (10A, 10B, 10C) wenigstens so groß ist wie die Anzahl der Phasen, so daß jede Wicklung (26) einer Phase mit einem zugeordneten Anschlußring (10A, 10B, 10C) verbunden ist, und wobei die Anschlußringe (10A, 10B, 10C) an ihrer Außenseite Vorsprünge (14) zum Positionieren der Anschlußringe (10A, 10B, 10C) aufweisen, die sich in radialer Richtung erstrecken, **dadurch gekennzeichnet, daß** der Stator (22) in einem Gehäuse (30) aufgenommen ist und an einer Innenwand des Gehäuses (30) Ausnehmungen (42) ausgebildet sind, die mit den Vorsprüngen (14) an der Außenseite der Anschlußringe (10A, 10B, 10C) zusammenwirken, um die Anschlußringe (10A, 10B, 10C) zu positionieren, und daß die Ausnehmungen (42), welche jeweils einem Anschlußring (10A, 10B oder 10C) zugeordnet sind, jeweils die gleiche axiale Tiefe aufweisen, die sich von der axialen Tiefe der Ausnehmungen, die anderen Anschlußringen zugeordnet sind, unterscheidet, so daß die Anschlußringe (10A, 10B, 10C) in axialer Richtung voneinander beabstandet angeordnet sind.

2. Maschine nach Anspruch 1, **dadurch gekennzeichnet, daß** die Wicklungen (26) in einer Sternschaltung verschaltet sind und die Anzahl der Anschlußringe (10A, 10B, 10C) der Anzahl der Phasen plus Eins (1) entspricht, wobei einer der Anschlußringe (10A, 10B, 10C) zur Verbindung mit dem Sternpunkt der Sternschaltung vorgesehen ist.

3. Maschine nach Anspruch 1, **dadurch gekennzeichnet, daß** die Wicklungen (26) in einer Dreieckschaltung verschaltet sind und die Anzahl der Anschlußringe (10A, 10B, 10C) der Anzahl der Phasen entspricht.

4. Maschine nach einem der vorangehenden Ansprüche, **dadurch gekennzeichnet, daß** die Anschlußringe (10A, 10B, 10C) im wesentlichen gleichförmig sind.

5. Maschine nach einem der vorangehenden Ansprüche, **dadurch gekennzeichnet, daß** die Anschlußringe (10A, 10B, 10C) aus einem gestanzten Blech hergestellt sind.

6. Maschine nach einem der vorangehenden Ansprüche, **dadurch gekennzeichnet, daß** die Anschlußringe (10A, 10B, 10C) aus einem elektrisch gut leitenden, gut schweißbaren Metall, beispielsweise einer Cu-Legierung, hergestellt sind.

**7.** Maschine nach einem der vorangehenden Ansprüche, **dadurch gekennzeichnet, daß** die Vorsprünge (14) zum Positionieren an jedem Anschlußring (10A, 10B, 10C) vorgesehen sind.

**8.** Maschine nach einem der vorangehenden Ansprüche, **dadurch gekennzeichnet, daß** die Anschlußringe (10A, 10B, 10C) an ihrer Außenseite Anschlußfahnen (16) zum Anschließen einer Stromversorgung für die Maschine aufweisen, die sich in axialer Richtung, senkrecht zur Ebene der Anschlußringe (10A, 10B, 10C) erstrekken.

**9.** Maschine nach einem der vorangehenden Ansprüche, **dadurch gekennzeichnet, daß** die Anschlußringe (10A, 10B, 10C) an ihrer Innenseite Vorsprünge (18) zum Anbringen von Wicklungsenden (28) aufweisen, die sich in radialer Richtung erstrecken.

**10.** Maschine nach einem der vorangehenden Ansprüche, **dadurch gekennzeichnet, daß** der Stator (22) einen Statorrückschluß und von dem Statorrückschluß nach innen oder außen radial abstehend Statorzähne (24) aufweist, zwischen denen Statornuten zum Aufnehmen der Wicklungen (26) gebildet sind.

**11.** Maschine nach den Ansprüchen 9 und 10, **dadurch gekennzeichnet, daß** die Anzahl der Vorsprünge (18) zum Anbringen von Wicklungsenden der Anzahl der Statornuten entspricht.

**12.** Maschine nach einem der vorangehenden Ansprüche, **dadurch gekennzeichnet, daß** die Anzahl der Ausnehmungen (42) der Anzahl der Statornuten entspricht.

**13.** Maschine nach einem der vorangehenden Ansprüche, **dadurch gekennzeichnet, daß** die Anschlußringe (10A, 10B, 10C) um einen Winkel gegeneinander verdreht sind.

**Claims**

**1.** An electric machine, in particular a DC motor having a stator (22) that carries windings (26) which are connected to each other for the control of the machine, each phase of the machine comprising at least one winding (26), and having a connector device to connect the windings (26), the connector device having a plurality of connector rings (10A, 10B, 10C) that are disposed at one end face of the stator (22) coaxially to the stator, the number of connector rings (10A, 10B, 10C) being at least as great as the number of phases so that each winding (26) belonging to one phase is connected to an associated connector ring (10A, 10B, 10C) and wherein the connector rings (10A, 10B, 10C) have projections (14) on their outside surface used to position the connector rings (10A, 10B, 10C), the projections extending in a radial direction, **characterized in that** the stator (22) is accommodated in a housing (30) and recesses (42) are formed on an inside wall of the housing (30), the recesses interacting with the projections (14) on the outside surface of the connector rings (10A, 10B, 10C) for the purpose of positioning the connector rings (10A, 10B, 10C), and that the recesses (42) that are associated with one connector ring (10A, 10B or 10C) have the same axial depth and that this axial depth is different from the axial depth of the recesses associated with the other connector rings, so that the connector rings (10A, 10B, 10C) are spaced apart from each other in an axial direction.

**2.** A machine according to claim 1, **characterized in that** the windings (26) are connected in a star connection and the number of connector rings (10A, 10B, 10C) corresponds to the number of phases plus one (1), one of the connector rings (10A, 10B, 10C) being provided for connection to the neutral point of the star connection.

**3.** A machine according to claim 1, **characterized in that** the windings (26) are connected in a delta connection and the number of connector rings (10A, 10B, 10C) corresponds to the number of phases.

**4.** A machine according to claim 1, **characterized in that** the connector rings (10A, 10B, 10C) are substantially identical.

**5.** A machine according to one of the preceding claims, **characterized in that** the connector rings (10A, 10B, 10C) are made from stamped sheet metal.

**6.** A machine according to one of the preceding claims, **characterized in that** the connector rings (10A, 10B, 10C) are made of a metal that has good conducting and welding properties, such as a Cu-alloy.

**7.** A machine according to one of the preceding claims, **characterized in that** the projections (14) used for positioning purposes are provided on each connector ring (10A, 10B, 10C).

**8.** A machine according to one of the preceding claims, **characterized in that** the connector rings (10A, 10B, 10C) have terminal lugs (16) on their outside surfaces for the purpose of connecting a power supply for the machine, the terminal lugs extending in an axial direction, perpendicular to the plane of the connector rings (10A, 10B, 10C).

**9.** A machine according to one of the preceding claims, **characterized in that** the connector rings (10A, 10B, 10C) have projections (18) on their inside surface to affix winding ends (28), the projections extending in a radial direction.

10. A machine according to one of the preceding claims, **characterized in that** the stator (22) has a stator back yoke and stator teeth (24) that project radially inwards or outwards from the stator back yoke, stator slots being formed between the stator teeth to receive the windings (26).

11. A machine according to claims 9 and 10, **characterized in that** the number of projections (18) to affix the winding ends corresponds to the number of stator slots.

12. A machine according to one of the preceding claims, **characterized in that** the number of recesses (42) corresponds to the number of stator slots.

13. A machine according to one of the preceding claims, **characterized in that** the connector rings (10A, 10B, 10C) are offset against each other at an angle.

## Revendications

1. Machine électrique, en particulier moteur à courant continu, avec un stator (22) qui porte des enroulements (26) qui sont interconnectés ensemble pour exciter la machine, chaque phase de la machine comprenant au moins un enroulement (26), et avec un dispositif de connexion pour interconnecter les enroulements (26), le dispositif de connexion présentant plusieurs bagues de connexion (10A, 10B, 10C) qui sont disposées à une extrémité frontale du stator (22) de façon coaxiale par rapport à celui-ci, le nombre des bagues de connexion (10A, 10B, 10C) étant au moins identique au nombre des phases, de sorte que chaque enroulement (26) d'une phase est relié à une bague de connexion associée (10A, 10B, 10C), et dans laquelle les bagues de connexion (10A, 10B, 10C) présentent sur leur face extérieure des saillies (14) pour positionner les bagues de connexion (10A, 10B, 10C) qui s'étendent dans la direction radiale, **caractérisée en ce que** le stator (22) est reçu dans un boîtier (30) et sur une paroi intérieure du boîtier (30) des évidements (42) sont réalisés qui coopèrent avec les saillies (14) sur la face extérieure des bagues de connexion (10A, 10B, 10C) pour positionner les bagues de connexion (10A, 10B, 10C), et **en ce que** les évidements (42), qui sont respectivement associés à une bague de connexion (10A, 10B ou 10C), présentent respectivement la même profondeur axiale qui est différente de la profondeur axiale des évidements, qui sont associés à d'autres bagues de connexion, de sorte que les bagues de connexion (10A, 10B, 10C) sont disposées de façon espacée les unes des autres dans la direction axiale.

2. Machine selon la revendication 1, **caractérisée en ce que** les enroulements (26) sont interconnectés par un couplage en étoile et le nombre des bagues de connexion (10A, 10B, 10C) correspond au nombre des phases plus un (1), dans laquelle l'une des bagues de connexion (10A, 10B, 10C) est prévue pour la connexion au point neutre du couplage en étoile.

3. Machine selon la revendication 1, **caractérisée en ce que** les enroulements (26) sont interconnectés par un couplage en triangle et le nombre des bagues de connexion (10A, 10B, 10C) correspond au nombre des phases.

4. Machine selon l'une quelconque des revendications précédentes, **caractérisée en ce que** les bagues de connexion (10A, 10B, 10C) sont de forme substantiellement identique.

5. Machine selon l'une quelconque des revendications précédentes, **caractérisée en ce que** les bagues de connexion (10A, 10B, 10C) sont fabriquées à partir de tôle estampée.

6. Machine selon l'une quelconque des revendications précédentes, **caractérisée en ce que** les bagues de connexion (10A, 10B, 10C) sont fabriquées à partir d'un métal bon conducteur électrique et facile à souder, par exemple à partir d'un alliage de Cu.

7. Machine selon l'une quelconque des revendications précédentes, **caractérisée en ce que** les saillies (14) pour le positionnement sont prévues sur chaque bague de connexion (10A, 10B, 10C).

8. Machine selon l'une quelconque des revendications précédentes, **caractérisée en ce que** les bagues de connexion (10A, 10B, 10C) présentent sur leur face extérieure des barrettes (16) pour connecter une alimentation électrique pour la machine et qui s'étendent dans la direction axiale perpendiculairement au plan des bagues de connexion (10A, 10B, 10C).

9. Machine selon l'une quelconque des revendications précédentes, **caractérisée en ce que** les bagues de connexion (10A, 10B, 10C) présentent sur leur face intérieure des saillies (18) pour monter des extrémités d'enroulement (28) et qui s'étendent dans la direction radiale.

10. Machine selon l'une quelconque des revendications précédentes, **caractérisée en ce que** le stator (22) présente un blindage magnétique de stator et des dents de stator (24) faisant saillie radialement à partir du blindage magnétique de stator vers l'intérieur ou vers l'extérieur, entre lesquelles des rainures de stator sont formées pour recevoir les enroulements (26).

**11.** Machine selon les revendications 9 et 10, **caractérisée en ce que** le nombre des saillies (18) pour monter des extrémités d'enroulement correspond au nombre des rainures de stator.

**12.** Machine selon l'une quelconque des revendications précédentes, **caractérisée en ce que** le nombre des évidements (42) correspond au nombre des rainures de stator.

**13.** Machine selon l'une quelconque des revendications précédentes, **caractérisée en ce que** les bagues de connexion (10A, 10B, 10C) sont tournées les unes par rapport aux autres sous un angle.

Fig. 1a

Fig. 1b

1    2    3    4    5    6    7    8    9

U (A)     V (B)     W (C)

Fig. 2

110

114
112
116
114
116
114

Fig. 3

Fig. 4a

Fig. 4b

Fig. 5.

Fig.6

Fig.7

Fig. 8

**EP 1 648 074 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2002224801 A
- WO 2004010562 A1
- DE 3607289